Europäisches Patentamt

European Patent Office

Office européen des brevets

(11) Veröffentlichungsnummer: **0 563 515 B1**

## (12) EUROPÄISCHE PATENTSCHRIFT

(45) Veröffentlichungstag der Patentschrift: **19.07.95**

(51) Int. Cl.⁶: **B60K 23/08**, B60K 17/356

(21) Anmeldenummer: **93100535.9**

(22) Anmeldetag: **15.01.93**

(54) **Fahrantrieb für Baumaschinen oder Baufahrzeuge.**

(30) Priorität: **28.03.92 DE 4210251**

(43) Veröffentlichungstag der Anmeldung:
**06.10.93 Patentblatt  93/40**

(45) Bekanntmachung des Hinweises auf die
Patenterteilung:
**19.07.95 Patentblatt  95/29**

(84) Benannte Vertragsstaaten:
**AT BE CH DE FR LI NL**

(56) Entgegenhaltungen:
**DE-A- 3 842 405**
**DE-C- 2 921 698**
**DE-C- 2 921 756**
**DE-C- 3 610 774**
**GB-A- 2 154 522**

(73) Patentinhaber: **O&K ORENSTEIN & KOPPEL AG**
**Staakener Strasse 53-63**
**D-13581 Berlin (DE)**

(72) Erfinder: **Leidinger, Gustav**
**Michael Steinherrstrasse 16**
**W-8904 Friedberg (DE)**

EP 0 563 515 B1

**Beschreibung**

Die Erfindung betrifft einen Fahrantrieb für Baumaschinen oder Fahrzeuge mit hydrostatischem Zusatzantrieb für eine oder mehrere Achsen und insbesondere für Grader nach dem Oberbegriff des Patentanspruches 1.

Neben Baumaschinen können beispielsweise auch Landmaschinen, Zugmaschinen, deren Anhänger für niedrige Geschwindigkeiten einen Antrieb aufweisen, Militärfahrzeuge und dgl. zweckmäßigerweise mit einem solchen hydrostatischen Zusatzantrieb ausgerüstet sein.

Die der Erfindung zugrunde liegende Problematik wird im folgenden zur besseren Verständlichkeit am Beispiel eines Graders erläutert. Sie ist jedoch auf andere Baumaschinen und Fahrzeuge übertragbar, die gleichermaßen wie ein Grader über einen Hauptantriebsstrang ständig angetriebene Treibräder sowie einen zuschaltbaren Zusatzantrieb für weitere Räder, also beispielsweise die Vorderräder aufweisen.

Bei einem Fahrantrieb der gattungsgemäßen Art besteht in erster Linie die grundsätzliche Forderung, daß die zusätzlich angetriebenen Räder mit den Haupttreibrädern gleichlaufen, also sich bei gleicher Radgröße mit gleicher Drehzahl drehen. Zur Erzielung eines solchen Gleichlaufs ist es aus der DE 29 21 698 C2 bzw. der DE 29 21 756 C2 bekannt, über Sensoren sowohl die Drehzahl der zusätzlich angetriebenen Räder, als auch eine der Drehzahl der Haupttreibräder entsprechende Drehzahl eines rotierenden Teils des Hauptantriebsstranges zu erfassen. Diese Drehzahlen werden als Steuergrößen einer elektronischen Steuereinrichtung zugeführt, die entsprechend einem Vergleich der beiden Drehzahlen eine in ihrem Fördervolumen pro Umdrehung verstellbare Stellpumpe so steuert, daß die Drehzahl der zusätzlich angetriebenen Räder der der Hauptantriebsräder nachgeführt wird, um so den geforderten Gleichlauf zu erzielen.

Diese bekannte Art der Steuerung der Drehzahl der zusätzlich angetriebenen Räder weist verschiedene Nachteile auf. So liegen im angesprochenen Fall eines Graders die zusätzlich angetriebenen Vorderräder offen, so daß die dort anzuordnenden empfindlichen Sensoren zur Drehzahlerfassung des Rades einer starken Verschmutzung ausgesetzt sind und sehr leicht beschädigt werden können. Als Ausweg bietet sich hier nur eine aufwendige Kapselung an. Weiterhin werden bei Gradern als Hydraulikmotoren für den Zusatzantrieb der Vorderräder neben Axial- auch Radialkolbenmotoren verwendet, bei denen es sich um sogenannte Langsamläufer handelt. Bei solchen Motoren drehen sich die rotierenden Teile entsprechend der Drehzahl des davon angetriebenen Rades. Dies bedeutet, daß im Langsamfahrbetrieb von den Drehzahlsensoren, bei denen es sich in der Regel um Induktivgeber handelt, lediglich niederfrequente Signale erzeugt werden, die eine genaue Gleichlaufregelung nur sehr schwer ermöglichen. Darüber hinaus müssen zur Verkabelung der Drehzahlsensoren an den Vorderrädern eines Graders lange Leitungswege in Kauf genommen werden.

Der Erfindung liegt die Aufgabe zugrunde, einen Fahrantrieb der gattungsgemäßen Art derart weiterzubilden, daß sich eine direkte Drehzahlerfassung der zusätzlich angetriebenen Räder mit Hilfe eines entsprechenden Drehzahlsensors erübrigt und somit die vorstehend erörterten Nachteile vermieden werden.

Diese Aufgabe wird durch die im Patentanspruch 1 angegebenen Merkmale gelöst.

Die Erfindung geht dabei von folgender Erkenntnis aus: Unter der Forderung, daß sich die Haupttreibräder und die zusätzlich angetriebenen Räder mit gleicher Drehzahl drehen, ist der zum Antrieb der Hydraulikmotoren des Zusatzantriebes notwendige Förderstrom an Hydraulikflüssigkeit direkt abhängig von der Drehzahl der Haupttreibräder und vom Schluckvolumen der Hydraulikmotoren pro Umdrehung. Dieser Förderstrom muß von der Stellpumpe des Zusatzantriebes bereitgestellt werden und ist wiederum direkt abhängig von der Drehzahl des die Pumpe treibenden Antriebsmotors und dem Fördervolumen pro Umdrehung der Pumpe. Aufgrund dieser gegenseitigen Abhängigkeit ist es möglich, die Drehzahl der Hydraulikmotoren durch eine von der Steuereinrichtung gesteuerte Einstellung des Pumpenfördervolumens pro Pumpenumdrehung in Abhängigkeit des Verhältnisses der Drehzahl der Haupttreibräder zu der Drehzahl des Antriebsmotors einzustellen, wie dies im Anspruch 1 angegeben ist. Es genügt also, die elektronische Steuereinrichtung eingangsseitig mit je einem geeigneten Sensor zur Erfassung der Drehzahl der Hauptantriebsräder bzw. des Antriebsmotors auszurüsten. Ausgangsseitig ist die Steuereinrichtung mit einem Stellglied an der Stellpumpe verbunden, um deren Fördervolumen pro Umdrehung entsprechend einer aus den Drehzahl-Eingangsgrößen abgeleiteten Stellgröße einzustellen.

Vorteilhafterweise kann also auf die unmittelbare Erfassung der Drehzahl der zusätzlich angetriebenen Räder verzichtet werden, da diese unmittelbar vom Wert des Pumpenfördervolumens pro Pumpenumdrehung und der Drehzahl der Pumpe und damit der Drehzahl des die Pumpe treibenden Motors abhängt. Die Drehzahl der Haupttreibräder bzw. des Antriebsmotors kann dabei über Sensoren erfaßt werden, die üblicherweise am Antriebsmotor bzw. im Hauptantriebsstrang vorgesehen sind, also beispielsweise Induktivgeber, die die Drehzahl des Schwungrades des Antriebsmotors zur Ansteuerung eines Drehzahlmessers bzw. die eines Getriebezahnrades, das zu den Haupttreibrädern ein festes Übersetzungsverhältnis aufweist, erfassen. Letzterer Induktivgeber wird beispielsweise zur Ansteuerung des Fahrzeugtachometers verwendet.

Besonders einfach ist das Pumpenfördervolumen pro Pumpenumdrehung einzustellen, wenn - wie in Anspruch 2 als bekannt vorausgesetzt ist - als Stellpumpe eine Axialkolbenpumpe mit in ihrem Schwenkwinkel hydraulisch verstellbarer Schwenkwiege verwendet wird, da hierbei das Fördervolumen pro Pumpenumdrehung proportional zum Tangens des Schwenkwinkels der Schwenkwiege ist.

Dadurch ist es möglich, den Schwenkwinkel der Schwenkwiege mit der im kennzeichnenden Teil des 2. Patentanspruches angegebenen Beziehung zu berechnen, wobei in die Beziehung einerseits die beiden zu messenden Steuergrößen, nämlich die Drehzahl eines von Sensor erfaßten Rotationsteils im Hauptantriebsstrang als Maß für die Drehzahl der Haupttreibräder und die Drehzahl des Antriebsmotors und andererseits die von der Auslegung der gesamten Fahrantriebsvorrichtung abhängigen konstruktiven Kenngrößen eingehen, nämlich das Schluckvolumen der für den Zusatzantrieb sorgenden Hydraulikmotoren pro Motorumdrehung, der maximale Schwenkwinkel der Schwenkwiege, das maximale Fördervolumen der Axialkolbenpumpe pro Pumpenumdrehung, ein konstantes Übersetzungsverhältnis eines ggf. zwischen Antriebsmotor und Axialkolbenpumpe zwischengeschalteten Übersetzungsgetriebes so wie das konstante Übersetzungsverhältnis zwischen dem vom Sensor erfaßten Rotationsteil im Hauptantriebsstrang und den vom Hauptantriebsstrang angetriebenen Rädern. Aus der Berechnung des Schwenkwinkels nach dieser Beziehung kann ein Steuersignal erzeugt werden, das über den Steuerausgang der Steuereinrichtung dem Stellorgan für den Schwenkwinkel der Axialkolbenpumpe zuführbar ist.

Im Zusammenhang mit der mittelbaren Erfassung der Drehzahl der Haupttreibräder durch die Abtastung eines Rotationsteils im Hauptantriebsstrang, also beispielsweise eines Zahnrades im Lastschaltgetriebe, dessen Drehzahl in einem festen Übersetzungsverhältnis zur Drehzahl des zugehörigen Haupttreibrades steht, ergibt sich der Vorteil, daß das von dem sich in der Regel schneller drehenden Rotationsteil im Hauptantriebsstrang abgeleitete Meßsignal auch bei Langsamfahrt hochfrequent genug ist, um eine ausreichend genaue Drehzahlerfassung und schnelle Einstellung des Fördervolumens pro Pumpenumdrehung der Axialkolbenpumpe zu ermöglichen. Unkritisch ist in diesem Zusammenhang die Drehzahlerfassung am Antriebsmotor, da dieser in der Regel mit einer Drehzahl von etwa 1000 bis 2500/min läuft.

Durch die im Anspruch 3 angegebene Ausgestaltung der erfindungsgemäßen Fahrantriebsvorrichtung wird die Gleichlaufsteuerung der zusätzlich angetriebenen Räder noch in der Hinsicht verbessert, daß eine Kompensation des sich mit abnehmender Drehzahl und mit zunehmendem Betriebsdruck verringernden volumetrischen Wirkungsgrades der Hydraulikmotoren und der Pumpe des Zusatzantriebs erfolgt. Mit Hilfe dieser Kompensation wird also einerseits der Gleichlauf zwischen zusätzlich angetriebenen Rädern und den Haupttreibrädern optimiert. Andererseits kann das Maß der Kompensation auch so eingestellt werden, daß die zusätzlich angetriebenen Räder mit einem gewissen Vorlauf - also schneller - gegenüber den Haupttreibrädern laufen. Bei Gradern mit zusätzlich angetriebenen Vorderrädern hat dies beispielsweise den Vorteil, daß beim Fahren von Kurven sich der von den Vorderrädern befahrene größere Kurvenradius nicht nachteilig auf das Fahrverhalten des Graders auswirkt. Bei einer Gleichlaufsteuerung der Vorderräder nach dem St.d.T., wo direkt die Drehzahl der Vorderräder erfaßt wird, führen der wegen des größeren Kurvenradius der Vorderräder bedingte Vorlauf und die damit verbundene höhere Drehzahl der Vorderräder dazu, daß die Steuerung den Ölförderstrom zurücknimmt, da sie die erhöhte Drehzahl der Vorderräder dahingehend wertet, daß die Vorderräder zu stark angetrieben werden. Dadurch können die Vorderräder so stark abgebremst werden, daß sie insbesondere bei losem Untergrund zum Rutschen kommen.

Dieser Effekt tritt bei der erfindungsgemäßen Fahrantriebsvorrichtung nicht auf, da die Drehzahl der Vorderräder nicht unmittelbar erfaßt wird. Weisen die Vorderräder einen kompensationsbedingten Vorlauf auf, so bringen sie auch beim Durchfahren von Kurven noch eine Zugkraft auf den Boden auf. Die Wirkungskompensation bewirkt also auch, daß Kurven weitgehend ohne Aufbau von Spannungen zwischen Zusatz- und Hauptantrieb durchfahren werden können. Der dabei auftretende notwendige Vorlauf der Vorderräder und der dadurch größere Schluckstrom erhält seine Zusatzmenge aus dem kompensationsbedingten Überangebot der Stellpumpe. Dabei nimmt naturgemäß der Förderdruck und damit die erreichbare Zugkraft zwar ab, jedoch werden Verspannungen - wie bereits erläutert - vermieden, so daß ein Abschalten oder eine Freilaufschaltung des Zusatzantriebs, wie es bei den Antrieben nach dem eingangs genannten St.d.T. notwendig ist, entfallen kann.

Nach Patentanspruch 4 kann die Kompensationskurve als Wertepaartabelle oder Berechnungsformel in der Steuereinrichtung abgespeichert sein. Aus der Drehzahl des Hauptantriebsstranges, die unmittelbar mit der Fahrgeschwindigkeit des Graders zusammenhängt, kann ein den Grad der Fördervolumenvergrößerung der Stellpumpe bestimmender Kompensationswert ermittelt und das Pumpenfördervolumen pro Pumpenumdrehung entsprechend durch die Steuereinrichtung eingestellt werden. Aufgrund der vorstehenden Maßnahmen kann der Grad der Kompensation durch eine Änderung der Wertepaartabelle oder der Berechnungsformel relativ einfach und schnell geändert werden. Dies ist beispielsweise der Fall, wenn der praktische Fahreinsatz eine solche Änderung wünschenswert macht. Hier ist insbesondere auch an Verschleißerscheinungen im Zusatzantrieb zu denken, da sich der volumetrische Wirkungsgrad durch einen Verschleiß im Laufe der Zeit verringern kann.

Ein die Fahreigenschaften eines Grader stark beeinflussendes Kriterium ist die sogenannte "Aggressivität" der Vorderräder, womit ein bestimmter standig vorhandener Vorlauf der Vorderräder gegenüber den Haupttreibrädern verstanden wird. Gemäß der in Anspruch 5 angegebenen Maßnahmen kann eine solche Aggressivität der Vorderräder durch die angegebene Zusatzschalteinrichtung eingestellt werden, mittels derer das Pumpenfördervolumen pro Pumpenumdrehung ggf. auch noch über das Maß der Wirkungsgradkompensation hinaus vergrößerbar ist. Dabei hat sich gezeigt, daß eine stufenweise Vergrößerung des Pumpen-Fördervolumens pro Pumpenumdrehung (Anspruch 6) für eine befriedigende Einstellung der Aggressivität vorteilhaft ist. Eine stufenlose Einstellbarkeit der Aggressivität würde den Maschinenführer nur dazu veranlassen, unnötig oft eine Änderung der Einstellung vornehmen zu wollen. Es hat sich gezeigt, daß bereits Stufensprünge von ca. 2 % zweckmäßig sind, um den gewünschten Effekt, nämlich ein starkes Ziehen der Vorderräder, zu erreichen.

Besonders geeignet für eine Steuereinrichtung ist ein Mikroprozessor (Anspruch 7), da er die variablen Betriebsdaten über entsprechende Signaleingänge erfassen, mit den intern gespeicherten, konstanten konstruktiven Kenngrößen, also z.B. die zum Anspruch 2 genannten Kenngrößen des Zusatzantriebs und der im Anspruch 4 angegebenen Kompensationskurve weiterverarbeiten und entsprechende Steuersignale für die Einstellung des Pumpenfördervolumens pro Pumpenumdrehung über Steuerausgänge abgeben kann. Ein solcher Mikroprozessor ist auch mit Vorteil mit einem Dateneingabe-Gerät zur Eingabe und/oder Änderung der konstruktiven Kenngrößen der Fahrantriebsvorrichtung (Anspruch 8) kombinierbar. Zur Vermeidung einer Fehleinstellung der Fahrantriebsvorrichtung durch den Anwender kann dabei vorgesehen sein, daß über ein solches Eingabegerät nur mit der Betreuung des Graders beauftragte Servicepersonen verfügen.

Zusammenfassend ergeben sich durch die erfindungsgemäße Ausgestaltung der Fahrantriebsvorrichtung in fahrtechnischer Hinsicht weitere Vorteile, nämlich, daß über eine Zugkraftvorwahl durch entsprechende Einstellung der Aggressivität der Vorderräder eine optimale Anpassung des Graders an die jeweiligen Einsatz- und Bodenverhältnisse erfolgen kann. Darüber hinaus kann sich der Maschinenführer beim Einsatz des Graders nach dem Schlupfverhalten der Vorderräder orientieren und muß nicht mehr die schwer einsehbaren Hinterräder beobachten. Weiterhin können die Vorderräder bei teilentlasteter Vorderachse nicht mehr durchdrehen, so daß keine Blindleistung verbraucht wird. Dadurch wird der Grader insgesamt leistungsstärker.

Weitere Merkmale, Einzelheiten und Vorteile der Erfindung sind der nachfolgenden Beschreibung entnehmbar, in der ein Ausführungsbeispiel anhand der beiliegenden Figuren näher erläutert wird. Es zeigen:

Figur 1 - eine teilweise aufgebrochene, schematisierte Seitenansicht eines Graders mit der erfindungsgemäßen Fahrantriebsvorrichtung,

Figur 2 - ein Blockschaltbild einer erfindungsgemäßen Fahrantriebsvorrichtung und

Figur 3 - ein Diagramm des volumetrischen Gesamtwirkungsgrades der den Zusatzantrieb zugeordneten Stellpumpe und Hydraulikmotoren in Abhängigkeit der Fahrgeschwindigkeit des Grader mit einer Kompensationskurve.

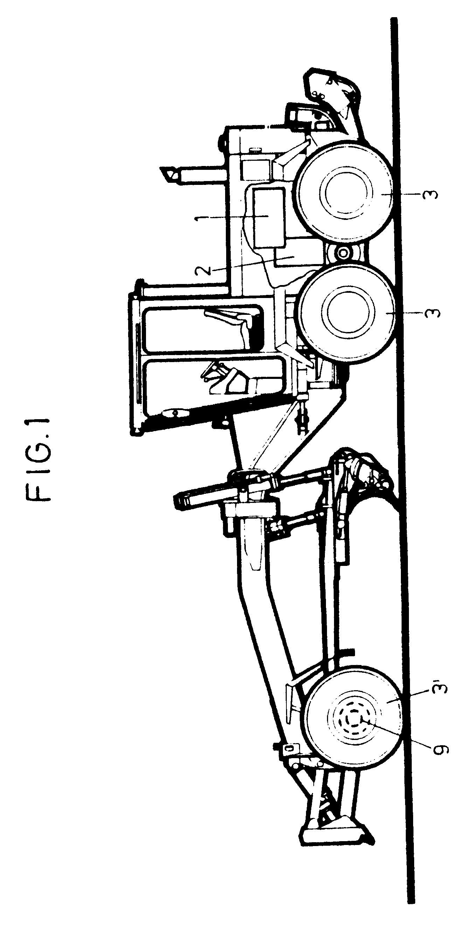

Wie in Figur 1 erkennbar ist, weist der Grader an seinem (nicht dargestellten) Hinterrahmen gelagert einen Antriebsmotor 1 auf, an den ein Lastschaltgetriebe 2 entweder mit integriertem Drehmomentwandler oder mit Kupplung gekoppelt ist. Über diesen Hauptantriebsstrang mit einer ebenfalls nicht näher dargestellten Tandemachse werden die Hinterräder 3 des Graders ständig angetrieben. Der Fahrantrieb des Graders umfaßt weiterhin einen zuschaltbaren Zusatzantrieb für die Vorderräder 3' in Form von in die Vorderräder 3' integrierten Hydraulikmotoren, von denen in Figur 1 der Hydraulikmotor 9 des linken Vorderrades 3' gestrichelt dargestellt ist.

Die weiteren in Figur 1 erkennbaren Bauteile des Graders sind völlig üblich und bedürfen daher keiner weiteren Erläuterung.

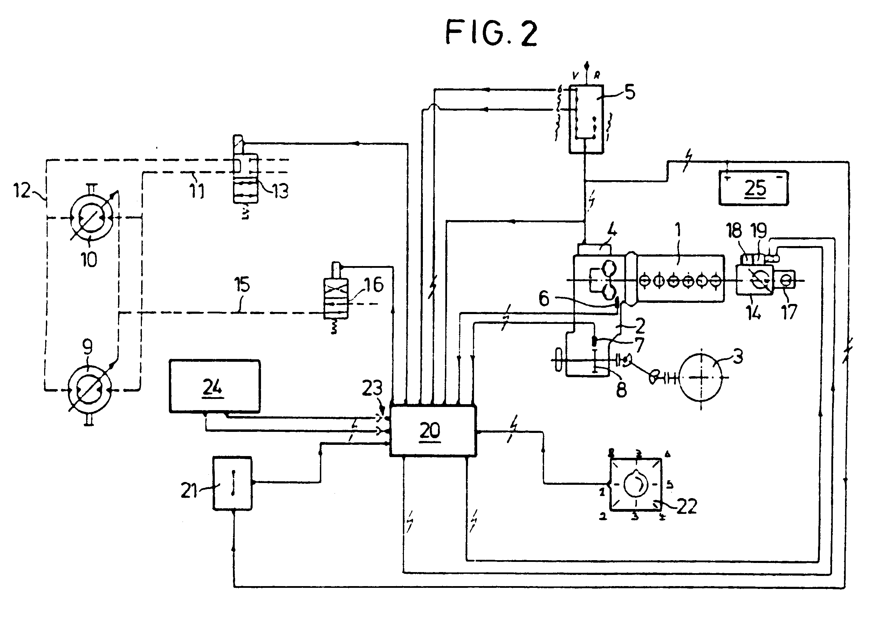

Aus Figur 2 wird der grundsätzliche Aufbau eines Fahrantriebs deutlich, wie er in dem Grader nach Figur 1 eingesetzt ist. Es ist wiederum der zentrale Antriebsmotor 1 in Form eines 6-Zylinder-Dieselmotors erkennbar, der mit einem Lastschaltgetriebe 2 mit integriertem Drehmomentwandler zum Antrieb der in Figur 2 schematisch dargestellten Hinterräder 3 des Graders gekoppelt ist. Das Lastschaltgetriebe 2 ist über den elektrohydraulischen Steuerblock 4 elektrisch mit einem Gangschalter 5 verbunden, über den der jeweilige Fahrgang anwählbar ist. Dem Lastschaltgetriebe 2 sind zwei Induktivgeber 6,7 zugeordnet, deren erster 6 die Drehzahl des Schwungrades des Antriebsmotors 1 erfaßt. Der zweite Induktivgeber 7 erfaßt die Drehzahl eines abtriebsseitig am Lastschaltgetriebe 2 angeordneten Zahnrades 8, das ein festes Übersetzungsverhältnis $c_S$ zum Hinterrad 3 aufweist.

Als Zusatzantrieb für die beiden Vorderräder 3' des Graders dienen die beiden hydraulisch parallel geschalteten Hydromotoren 9,10, bei denen es sich um sogenannte Langsamläufer in Form von Radialkolbenmotoren handelt. Die Vorlaufleitung 11 und die Rücklaufleitung 12 können mit Hilfe eines Steuerventils 13 kurzgeschlossen bzw. mit den beiden Ausgängen der vom Antriebsmotor 1 direkt angetriebenen Stellpumpe 14 verbunden werden. Weiterhin ist jeweils ein Steuereingang an den Hydraulikmotoren 9,10 mit einer hydraulischen Steuerleitung 15 verbunden, in der ein Umschaltventil 16 angeordnet ist. Mit dessen Hilfe kann das Schluckvolumen der Hydraulikmotoren 9,10 verändert werden.

Bei der Stellpumpe 14 handelt es sich um eine Axialkolbenpumpe mit einer in ihrem Schwenkwinkel A hydraulisch verstellbaren Schwenkwiege. Das Fördervolumen $V_P$ der Stellpumpe 14 pro Pumpenumdrehung ist proportional zum Tangens des Schwenkwinkels A der Schwenkwiege. Es gilt also:

$$V_P/V_{Pmax} = tg\ A/tg\ A_{max}$$

mit

$V_{Pmax}$ = maximales Fördervolumen pro Pumpenumdrehung,

$A_{max}$ = maximaler Schwenkwinkel der Schwenkwiege.

Der Schwenkwinkel A ist mit Hilfe einer nicht näher dargestellten hydraulischen Verstellvorrichtung an der Stellpumpe 14 variierbar, die durch eine Speisepumpe 17 mit Hydraulikflüssigkeit versorgt wird. Die hydraulische Stellvorrichtung wird mit Hilfe zweier Proportionalmagnetventile 18,19 gesteuert. Diese Speisepumpe 17 ergänzt auch das aus Stellpumpe 14 und Radialkolbenmotoren 9,10 austretende Lecköl und tauscht einen Teilstrom vom im geschlossenen Kreislauf befindlichen Öles zur Kühlung aus.

Als zentrale Steuereinrichtung dient der Mikroprozessor 20, der eingangsseitig mit dem Gangschalter 5 bzw. dem elektro-hydraulischen Steuerblock 4, mit den beiden Induktivgebern 6,7, einem Ein-Aus-Schalter 21 und einem 8-stufigen Stufenschalter 22 verbunden ist. Ausgangsseitig ist der Mikroprozessor 20 mit dem Steuerventil 13, dem Umschaltventil 16 und den beiden Proportional-Magnetventilen 18,19 verbunden. Darüber hinaus kann der Mikroprozessor 20 über eine entsprechende Steckverbindung 23 mit einem externen Dateneingabegerät 24 verbunden werden.

Alle elektrischen Komponenten werden vom Bordnetz mit elektrischer Energie versorgt, was durch die Batterie 25 in Figur 2 angedeutet ist.

Mit Hilfe des Mikroprozessors 20 werden die eingangsseitig anstehenden Signale von den verschiedenen elektrischen Komponenten entsprechend einem im Mikroprozessor 20 abgespeicherten Steuerprogramm weiterverarbeitet. Als Ergebnis gibt der Mikroprozessor 20 über seine Steuerausgänge verschiedene Signale an das Steuerventil 13, das Umschaltventil 16 und die Proportional-Magnetventile 18,19 ab. Dies erfolgt entsprechend der nachfolgenden Beschreibung:

Der Mikroprozessor 20 ermittelt aus dem vom Induktivgeber 6 am Schwungrad des Antriebsmotors 1 herangeführten Signal die Drehzahl $n_M$ des Antriebsmotors 1, die bei Vorhandensein eines Übersetzungsgetriebes zwischen Antriebsmotor 1 und Stellpumpe 14 mit dem Übersetzungsverhältnis $c_M$ des Übersetzungsgetriebes zu dividieren ist. Für den in Figur 2 dargestellten Fall des Direktantriebs der Stellpumpe 14 durch den Antriebsmotor 1 hat das Übersetzungsverhältnis $c_M$ den Wert 1. Weiterhin ermittelt der Mikroprozessor 20 aus dem vom Induktivgeber 7 erzeugten Signal die Drehzahl $n_S$ des Zahnrades 8 und setzt diese durch Division mit dem Übersetzungsverhältnis $c_S$ zwischen dem Zahnrad 8 und dem Hinterrad 3 in die Drehzahl des Hinterrades 3 um. Neben dem Wert des Übersetzungsverhältnisses $c_S$ und ggf. des Übersetzungsverhältnisses $c_M$ sind im Speicher des Mikroprozessors 20 weitere Betriebskenngrößen der Fahrantriebsvorrichtung gespeichert, nämlich das Schluckvolumen $V_R$ der Hydraulikmotoren 9,10 pro Umdrehung, der maximale Schwenkwinkel $A_{max}$ der Schwenkwiege der Stellpumpe 14 und das maximale Fördervolumen $V_{Pmax}$ der Stellpumpe 14 pro Pumpenumdrehung. Mit Hilfe dieser Kenngrößen ermittelt der Mikroprozessor 20 den Schwenkwinkel A der Schwenkwiege nach der Beziehung:

$$tg\ A = (2 \times V_R \times tg\ A_{max} \times n_S/c_S)/(V_{Pmax} \times n_M/c_M).$$

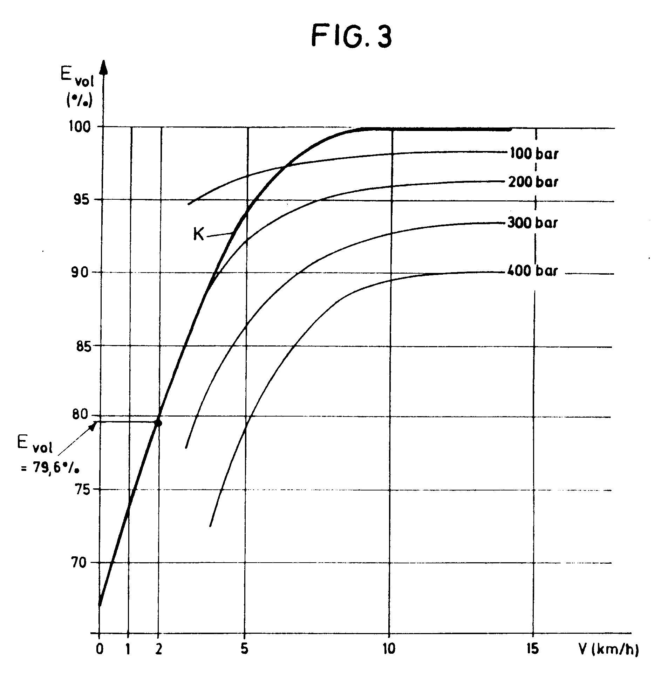

Unter theoretischen Bedingungen würde sich bei diesem Schwenkwinkel A ein Gleichlauf zwischen den von den Hydraulikmotoren 9,10 angetriebenen Vorderrädern und den Hinterrädern 3 des Graders ergeben. Allerdings ist hierbei noch der volumetrische Wirkungsgrad vernachlässigt, der in Figur 3 näher dargestellt ist. Auf der Abszisse dieses Diagramms ist die Fahrgeschwindigkeit des Graders dargestellt, die proportional zur Drehzahl der Hinterräder ist. Auf der Ordinate ist der volumetrische Gesamtwirkungsgrad $E_{vol}$ für die Kombination aus den Hydraulikmotoren 9,10 und der Stellpumpe 14 angegeben. Die vier dünn ausgezogenen Kurven stellen den Verlauf des volumetrischen Gesamtwirkungsgrades in Abhängigkeit der Fahrgeschwindigkeit bei vier unterschiedlichen Betriebsdrücken - nämlich 100 bar, 200 bar, 300 bar und 400 bar - des hydraulischen Zusatzantriebs dar. Daraus ist erkennbar, daß der volumetrische Gesamtwirkungsgrad mit abnehmender Fahrgeschwindigkeit und zunehmendem Betriebsdruck absinkt. Zur Kompensation dieser Wirkungsgradabnahme ist die stark ausgezeichnete Kompensationskurve K als Berechnungsformel im Speicher des Mikroprozessors 20 abgespeichert. Wird nun über die Erfassung der Drehzahl der Hinterräder 3 eine Fahrgeschwindigkeit von beispielsweise 2,0 km/h ermittelt, berechnet der Mikroprozessor 20 mit Hilfe der Berechnungsformel daraus den volumetrischen Wirkungsgrad zu $E_{vol}$ = 79,6 %. Mit diesem Wert wird der wie oben geschildert berechnete Wert des Schwenkwinkels A kompensiert zu:

$$\text{tg } A_{comp} = \text{tg } A/E_{vol} = 1{,}256 \times \text{tg } A$$

Im Zusammenhang mit der Kompensationskurve K ist zu ergänzen, daß diese bei niedrigen Fahrgeschwindigkeiten unterhalb etwa 4 km/h etwa dem Verlauf des volumetrischen Wirkungsgrades bei 200 bar entspricht. Wird nun der hydraulische Zusatzantrieb bei 100 bar betrieben, so findet eine Überkompensation der Wirkungsgradabnahme mit einem erhöhten Vorlauf der Vorderräder statt. Dies ist jedoch durchaus wünschenswert, da dadurch beispielsweise beim Befahren von Kurven die Vorderräder trotz ihres größeren Kurvenradius nach wie vor angetrieben laufen und somit Zugkräfte aufbauen können.

Falls andererseits der hydraulische Zusatzantrieb mit einem Druck von größer 200 bar betrieben wird, ist die druckbedingte Absenkung des volumetrischen Wirkungsgrades so gering, daß bei den bei hohen Zugkräften ohnehin auftretenden Schlupfwerten der etwas geringere Schlupf der Vorderräder sich nicht nachteilig auf das Fahrverhalten auswirkt, weil dabei die ausgeübte hohe Zugkraft nicht nennenswert abfällt.

Darüber hinaus wirkt sich der Vorlauf der Kompensationsmenge, also die beschriebene Überkompensation vorteilhaft auf die Befahrbarkeit enger Kurven aus. Aus fahrtechnischen Gründen können enge Kurven nur langsam durchfahren werden, wobei jedoch ein größerer Vorlauf der Vorderräder wegen des größeren Unterschiedes im Kurvenradius gegenüber den Hinterrädern notwendig ist. Dieser größere Vorlauf ist jedoch gerade bei engen Kurven gegeben, da diese mit kleinerer Geschwindigkeit durchfahren werden und damit eine größere Überschußmenge von der Pumpe geliefert wird.

Über die Wirkungsgradkompensation hinaus ist mit Hilfe des Stufenschalters 22 eine weitere Erhöhung des Schwenkwinkels A und damit des Vorlaufes der Vorderräder gegenüber den Hinterrädern möglich. Dazu ist über den Stufenschalter 22 dem Mikroprozessor 20 ein Stufensignal eingebbar, aufgrund dessen der Schwenkwinkel A in Stufen von 2 %, 4 %, 6 %, 8 %, 10 % gegenüber dem ermittelten kompensierten Schwenkwinkel $A_{comp}$ erhöht werden kann. Damit läßt sich die sogenannte "Aggressivität" der Vorderräder steigern, da diese aufgrund des höheren Fördervolumens der Stellpumpe 14 pro Pumpenumdrehung eine höhere Zugkraft aufbauen können. Stellt der Maschinenführer bei Einstellung einer bestimmten Schaltstufe - beispielsweise 6 % - fest, daß die Vorderräder zum Durchdrehen neigen, kann er durch Zurückdrehen des Stufenschalters 22 auf beispielsweise 4 % eine entsprechend geringere Aggressivität der Vorderräder einstellen. Weiterhin ist für den Fall, daß der Vorderradantrieb nur wenig Zugkraft aufbringen soll, auch eine "negative" Aggressivitätseinstellung mit -2 % und -4 % neben 0 % möglich.

Über das mit dem Mikroprozessor 20 verbindbare Dateneingabegerät 24 können sowohl die im Mikroprozessor 20 gespeicherten Kenngrößen als auch die Kompensationskurve entsprechend speziellen Anforderungen verändert werden.

Durch den Ein-Aus-Schalter kann der Zusatzantrieb zu- bzw. abgeschaltet werden. Entsprechend gibt der Mikroprozessor 20 Signale an das Steuerventil 13 und die Proportional-Magnetventile 19,19 ab. Wird der Zusatzantrieb beispielsweise ausgeschaltet, so wird das Steuerventil 13 auf die in Figur 2 gezeigte Kurzschlußstellung geschaltet und der Schwenkwinkel A der Schwenkwiege durch entsprechende Ansteuerung der Proportional-Magnetventile 19,19 auf den Wert 0 gestellt.

Aufgrund der eingangsseitigen Verbindung des Mikroprozessors 20 mit dem Gangschalter 5 bzw. dem elektro-hydraulischen Steuerblock 4 kann einerseits ein automatisches Abschalten des Zusatzantriebs beispielsweise bei einem Fahrbetrieb im höchsten, d.h. 6. Gang des Graders erfolgen.

Darüber hinaus kann der Mikroprozessor 20 durch die genannte Verbindung über eine entsprechende Ansteuerung des Umschaltventils 16 das Schluckvolumen der Hydraulikmotoren 9,10 um ein bestimmtes, konstantes Verhältnis verändern. Durch Umschaltung des Schluckvolumens auf den kleineren Wert in den höheren Gängen und damit größeren Geschwindigkeiten wird der nötige Förderstrom für die Radialkolbenmotoren verringert. Deshalb können Stellpumpe 14 und Schlauchleitungen kleiner dimensioniert werden. Zwar sinkt dann die von den Vorderrädern 3' aufbringbare Zugkraft, doch kann dies hingenommen werden, da bei höheren Geschwindigkeiten aufgrund der vorgegebenen Leistung des Antriebsmotors 1 auch die Zugkraft der Hinterräder 3 entsprechend absinkt. Falls das Schluckvolumen um den Faktor f reduziert wird, ist in der Formel für die Errechnung von tg A für den Wert $V_R$ dann f x $V_R$ zu setzen.

**Patentansprüche**

1. Fahrantrieb für Baumaschinen oder Fahrzeuge mit hydrostatischem Zusatzantrieb für eine oder mehrere Achsen, insbesondere für Grader, mit
   - einem Antriebsmotor (1),
   - Haupttreibrädern (Hinterräder 3), die über einen Hauptantriebsstrang (Lastschaltgetriebe 2) mit dem Antriebsmotor (1) gekoppelt sind und denen Sensoren (Induktivgeber 6, 7) zur Erfassung der Drehzahlen der Haupttreibräder (Hinterräder 3) zugeordnet sind, und
   - einem zuschaltbaren Zusatzantrieb für weitere Räder (Vorderräder 3') in Form von den Rädern (Vorderrädern 3') zugeordneten Hydraulikmotoren (9,10), die von einer mit dem Antriebsmotor (1) ggf. über ein Übersetzungsgetriebe gekoppelten Stellpumpe (14) mit verstellbarem Fördervolumen pro Umdrehung über eine elektronische Steuereinrichtung (Mikroprozessor 20) mit einer von der Drehzahl der Haupttreibräder (Hinterräder 3) abhängigen Drehzahl betreibbar sind,
   dadurch gekennzeichnet, daß die elektronische Steuereinrichtung (Mikroprozessor 20) eingangsseitig mit je einem Sensor (Induktivgeber 6, 7) zur Erfassung der Drehzahlen der Haupttreibräder (Hinterräder 3) bzw. des Antriebsmotors (1) und ausgangsseitig mit einem Stellglied (Proportional-Magnetventile 18,19) an der Stellpumpe (14) zur Einstellung des Pumpenfördervolumens pro Pumpenumdrehung verbunden ist, wobei die Drehzahl der Hydraulikmotoren (9,10) durch eine von der Steuereinrichtung (Mikroprozessor 20) gesteuerte Einstellung des Pumpenfördervolumens pro Pumpenumdrehung in Abhängigkeit des Verhältnisses der Drehzahl der Hauptantriebsräder (Hinterräder 3) zur Drehzahl des Antriebsmotors (1) einstellbar ist.

2. Fahrantrieb nach Anspruch 1, wobei die Stellpumpe (14) eine Axialkolbenpumpe mit in ihrem Schwenkwinkel (A) hydraulisch verstellbarer Schwenkwiege und das Fördervolumen pro Pumpenumdrehung proportional zum Tangens des Schwenkwinkels (A) der Schwenkwiege sind, dadurch gekennzeichnet, daß die elektronische Steuereinrichtung (Mikroprozessor 20) eingangsseitig zur Erfassung der Drehzahl der Haupttreibräder (Hinterräder 3) mit einem Sensor (Induktivgeber 7) zur Abtastung der Drehzahl eines Rotationsteils (Zahnrad 8) im Hauptantriebsstrang (Lastschaltgetriebe 2) verbunden ist, das zu den Haupttreibrädern (Hinterrädern 3) ein festes Übersetzungsverhältnis aufweist, und daß der Schwenkwinkel (A) der Schwenkwiege mittels der Steuereinrichtung (Mikroprozessor 20) nach der Beziehung

$$tg\ A = (2 \times V_R \times tg\ A_{max} \times n_S/c_S)/(V_{Pmax} \times n_M/c_M)$$

mit

$V_R$ :    Schluckvolumen des Hydraulikmotors (9,10) pro Umdrehung,

$A_{max}$ :    maximaler Schwenkwinkel der Schwenkwiege,

$V_{Pmax}$ :    maximales Fördervolumen der Stellpumpe (14) pro Pumpenumdrehung

$n_M$ :    Drehzahl des Antriebsmotors (1),

$c_M$ :    Übersetzungsverhältnis eines Übersetzungsgetriebes zwischen Antriebsmotor (1) und Stellpumpe (14),

$n_S$ :    Drehzahl eines vom Sensor erfaßten Rotationsteils (Zahnrad 8) im Hauptantriebsstrang (Lastschaltgetriebe 2) und

$c_S$ :    Übersetzungsverhältnis zwischen dem vom Sensor erfaßten Rotationsteil (Zahnrad 8) im Hauptantriebsstrang (Lastschaltgetriebe 2) und den Haupttreibrädern (Hinterräder 3)

berechenbar und über einen Steuerausgang der Steuereinrichtung (Mikroprozessor 20) entsprechend einstellbar ist.

3. Fahrantrieb nach Anspruch 1 oder 2, dadurch gekennzeichnet, daß das Fördervolumen $V_P$ der Stellpumpe (14) pro Pumpenumdrehung mittels der Steuereinrichtung (Mikroprozessor 20) zur Kompensation des mit abnehmender Umdrehungszahl und mit zunehmendem Beaufschlagungsdruck sich verringernden volumetrischen Wirkungsgrades ($E_{vol}$) der Hydraulikmotoren (9,10) und der Stellpumpe (14) vergrößerbar ist.

4. Fahrantrieb nach Anspruch 3, gekennzeichnet durch eine in der Steuereinrichtung (Mikroprozessor 20) als Wertepaartabelle oder Berechnungsformel abgespeicherte Kompensationskurve (K), anhand derer aus der Drehzahl der Haupttreibräder (Hinterräder 3) ein den Grad der Fördervolumenvergrößerung bestimmender Kompensationswert ermittelbar und das Fördervolumen der Stellpumpe (14) pro Pumpenumdrehung entsprechend durch die Steuereinrichtung einstellbar ist.

5. Fahrantrieb nach einem der Ansprüche 1 bis 4, gekennzeichnet durch eine der Steuereinrichtung (Mikroprozessor 20) eingangsseitig vorgeschaltete, manuell betätigbare Zusatzschalteinrichtung (Stufenschalter 22), mittels derer das Fördervolumen der Stellpumpe (14) pro Pumpenumdrehung zur Erhöhung des Vorlaufs der vom Zusatzantrieb angetriebenen Räder (Vorderräder 3') gegenüber den Haupttreibrädern (Hinterrädern 3) veränderbar ist.

6. Fahrantrieb nach Anspruch 5, dadurch gekennzeichnet, daß die Zusatzschalteinrichtung (Stufenschalter 22) mehrere Schaltstufen zur stufenweisen Vergrößerung des Pumpen-Fördervolumens pro Pumpenumdrehung aufweist.

7. Fahrantrieb nach einem der Ansprüche 1 bis 6, dadurch gekennzeichnet, daß die Steuereinrichtung einen Mikroprozessor (20) beinhaltet.

8. Fahrantrieb nach einem der Ansprüche 1 bis 7, dadurch gekennzeichnet, daß die Steuereinrichtung (Mikroprozessor 20) mit einem Dateneingabegerät (24) zur Eingabe und/oder Änderung von konstruktiven Kenngrößen des Fahrantriebs oder ggf. der Kompensationskurve (K) verbindbar ist.

**Claims**

1. Vehicular drive unit for construction site machines or vehicles with hydrostatic supplementary drive for one or more axles, especially for graders, having
   - a drive motor (1),
   - main driving wheels (rear wheels 3) which are coupled to the drive motor (1) by way of a main drive train (power-operated gearbox 2), and with which there are associated sensors (inductive-type signal generators 6, 7) for detecting the rotational speeds of the main driving wheels (rear wheels 3), and
   - a selectively connectable supplementary drive for further wheels (front wheels 3') in the form of hydraulic motors (9, 10) which are associated with the wheels (front wheels 3'), and which are arranged to be operated, by an adjustable pump (14) which is coupled to the drive motor (1), optionally by way of transmission gearing, and has an adjustable delivery volume per revolution, by way of an electronic control device (micro-processor 20), at a rotational speed dependent upon the rotational speed of the main driving wheels (rear wheels 3), characterised in that the electronic control device (micro-processor 20) is connected on the input side to a respective sensor (inductive-type signal generator 6, 7) to detect the rotational speeds of the main driving wheels (rear wheels 3) and of the drive motor (1), and on the output side to a setting device (proportional solenoid valves 18, 19) at the adjustable pump (14) for adjustment of the pump delivery volume per pump revolution, the rotational speed of the hydraulic motors (9, 10) being adjustable by means of adjustment of the pump delivery volume per pump revolution, controlled by the control device (micro-processor 20), in response to the ratio of the rotational speed of the main driving wheels (rear wheels 3) to the rotational speed of the drive motor (1).

2. Vehicular drive unit according to Claim 1, wherein the adjustable pump (14) is an axial piston pump with a pivoted cradle of which the pivot angle (A) is hydraulically adjustable and the delivery volume per pump revolution is proportional to the tangent of the pivot angle (A) of the pivoted cradle, characterised in that the electronic control device (micro-processor 20) is connected on the input side, for detection of the rotational speed of the main driving wheels (rear wheels 3), to a sensor (inductive-type signal generator 7) for scanning the rotational speed of a rotating part (gearwheel 8) in the main drive train (power-operated gearbox 2) which has a fixed transmission ratio with the main driving wheels (rear wheels 3), and that the pivot angle (A) of the pivoted cradle is arranged to be calculated by means of the control device (micro-processor 20) according to the equation

$$\text{tg } A = (2 \times V_R \times \text{tg } A_{max} \times n_S/c_S)/(V_{Pmax} \times n_M/c_M)$$

where

$V_R$ : intake volume of the hydraulic motor (9, 10) per revolution,

$A_{max}$ : maximum pivot angle of the pivoted cradle,

$V_{Pmax}$: maximum delivery volume of the adjustable pump (14) per pump revolution

$n_M$ : rotational speed of the drive motor (1),

$c_M$ : transmission ratio of transmission gearing between the drive motor (1) and adjustable pump (14),

$n_S$ : rotational speed of a rotating part (gearwheel 8) in the main drive train (power-operated gearbox 2), detected by the sensor, and

$c_S$ : transmission ratio between the rotating part (gearwheel 8) in the main drive train (power-operated gearbox 2), detected by the sensor, and the main drive wheels (rear wheels 3).

and to be adjusted accordingly by way of a control output of the control device (micro-processor 20).

3. Vehicular drive unit according to Claim 1 or 2, characterised in that the delivery volume Vp of the adjustable pump (14) per pump revolution can be increased by means of the control device (micro-processor 20) to compensate for the volumetric efficiency ($E_{vol}$) of the hydraulic motors (9, 10) and of the adjustable pump (14) decreasing as the speed of revolution decreases and the applied pressure increases.

4. Vehicular drive unit according to Claim 3, characterised by a compensation curve (K) which is stored in the control device (micro-processor 20) as a table of pairs of values or calculation formula and by means of which there can be obtained from the rotational speed of the main drive wheels (rear wheels 3) a compensation value determining the degree of increase in the delivery volume, and the delivery volume of the adjustable pump (14) per pump revolution is arranged to be adjusted accordingly by means of the control device.

5. Vehicular drive unit according to one of Claims 1 to 4, characterised by a supplementary switching device (step switch 22) which is connected before the control device (micro-processor 20) on the input side and is manually actuated, and by means of which the delivery volume of the adjustable pump (14) per pump revolution is variable in order to increase the lead of the wheels (front wheels 3'), driven by the supplementary drive, with respect to the main drive wheels (rear wheels 3).

6. Vehicular drive unit according to Claim 5, characterised in that the supplementary switching device (step switch 22) has a multiplicity of switch positions for the step-wise increase of the pump delivery volume per pump revolution.

7. Vehicular drive unit according to one of Claims 1 to 6, characterised in that the control device contains a micro-processor (20).

8. Vehicular drive unit according to one of Claims 1 to 7, characterized in that the control device (micro-processor 20) can be connected to a data input device (24) for the input and/or alteration of design parameters of the vehicular drive unit or optionally of the compensation curve (K).

**Revendications**

1. Dispositif d'entraînement pour des engins de chantier ou des véhicules comportant un dispositif d'entraînement hydrostatique supplémentaire pour un ou plusieurs essieux, notamment pour une niveleuse, comportant
   - un moteur d'entraînement (1),
   - des roues motrices principales (roues arrière 3), qui sont accouplées au moteur d'entraînement (1) par l'intermédiaire d'une chaîne d'entraînement principale (transmission 2 commandée en charge) et auxquelles sont associés des capteurs (transmetteurs inductifs 6, 7) servant à détecter les vitesses de rotation des roues motrices principales (roues arrière 3), et
   - un dispositif d'entraînement supplémentaire pouvant être branché en supplément, pour d'autres roues (roues avant 3') sous la forme de moteurs hydrauliques (9,10), qui sont associés aux roues (roues avant 3') et qui peuvent être entraînés par une pompe de réglage (14), accouplée au moteur d'entraînement (1) éventuellement par l'intermédiaire d'une transmission démultiplicatrice et possédant un volume de refoulement variable par rotation, par l'intermédiaire d'un dispositif de commande électronique (microprocesseur 20) avec une vitesse de rotation qui dépend de la vitesse de rotation des roues motrices principales (roue arrière 3),

   caractérisé en ce que le dispositif de commande électronique (microprocesseur 20) est raccordé côté entrée à des capteurs respectifs (transmetteurs inductifs 6,7) pour détecter les vitesses de rotation des roues motrices principales (roues arrière 3) ou du moteur d'entraînement (1) et, côté sortie, par un organe de réglage (soupapes magnétiques à action proportionnelle 18,19) à la pompe de réglage (14) pour le réglage du volume de refoulement de la pompe par rotation de cette dernière, la vitesse de rotation des moteurs hydrauliques (9,10) pouvant être réglée au moyen d'un réglage, qui est commandé par le dispositif de commande (microprocesseur 20), du volume de refoulement de la pompe à chaque rotation de cette dernière en fonction du rapport de la vitesse de rotation des roues motrices principales (roues arrière 3) à la vitesse de rotation du moteur d'entraînement (1).

2. Dispositif d'entraînement selon la revendication 1, dans lequel la pompe de réglage (14) est une pompe à piston axial comportant une bascule, dont l'angle de basculement (A) peut être réglé hydrauliquement, et le volume de refoulement pour chaque rotation de la pompe est proportionnel à la tangente de l'angle de basculement (A) de la bascule, caractérisé en ce que le dispositif de commande électronique (microprocesseur 20) est raccordé, côté entrée, pour la détection de la vitesse de rotation des roues motrices principales (roues arrière 3) d'un capteur (transmetteur inductif 7) pour explorer la vitesse de rotation d'une partie tournante (pignon 8) située dans la chaîne d'entraînement principale (transmission 2 commandée en charge), qui possède, par rapport aux roues motrices principales (roues arrière 3), un rapport de démultiplication fixe, et que l'angle de basculement (A) de la bascule peut être calculé au moyen du dispositif de commande (microprocesseur 20) conformément à la relation

$$\text{tg } A = (2 \times V_R \times \text{tg } A_{max} \times n_S/c_S)/(V_{Pmax} \times n_M/c_M)$$

avec

$V_R$ :  volume assuré par le moteur hydraulique (9,10) lors de chaque rotation,

$A_{max}$ :  angle maximum de basculement de la bascule,

$V_{Pmax}$ :  volume de refoulement maximum de la pompe de réglage (14) lors de chaque rotation de la pompe,

$n_M$ :  vitesse de rotation du moteur d'entraînement (1),

$c_M$ :  rapport de démultiplication d'une transmission démultiplicatrice située entre le moteur d'entraînement (1) et la pompe de réglage (14),

$n_S$ :  vitesse de rotation d'une partie tournante (pignon 8), détectée par le capteur et située dans la chaîne d'entraînement principale (transmission 2 commandée en charge), et

$c_S$ :  rapport de transmission entre la partie tournante (pignon 8) détectée par le capteur et situé dans la chaîne d'entraînement principale (transmission 2 commandée en charge) et les roues motrices principales (roues arrières 3),

et peut être réglé de façon correspondante par l'intermédiaire d'une partie de commande du dispositif de commande (microprocesseur 20).

3. Dispositif d'entraînement selon la revendication 1 ou 2, caractérisé en ce que le volume de refoulement Vp de la pompe de réglage (14) lors de chaque rotation de la pompe peut être accru au moyen du dispositif de commande (microprocesseur 20) pour la compensation du rendement volumétrique ($E_{vol}$) des moteurs hydrauliques (9, 10) et de la pompe de réglage (14), qui diminue lorsque la vitesse de rotation diminue et que la pression de charge augmente.

4. Dispositif d'entraînement selon la revendication 3, caractérisé par une courbe de compensation (K), qui est mémorisée dans le dispositif de commande (microprocesseur 20) sous la forme d'un tableau de couples de valeurs ou d'une formule de calcul et sur la base de laquelle une valeur de compensation déterminant le degré d'augmentation du volume de refoulement peut être déterminé à partir de la vitesse de rotation des roues motrices principales (roue arrière 3) et le volume de refoulement de la pompe de réglage (14) lors de chaque rotation de la pompe est réglable de façon correspondante par le dispositif de commande.

5. Dispositif d'entraînement selon l'une des revendications 1 à 4, caractérisé par un dispositif de commutation supplémentaire (commutateur à échelons 22), qui peut être actionné manuellement et est branché, côté entrée, en amont du dispositif de commande (microprocesseur 20) et à l'aide duquel le volume de refoulement de la pompe de réglage (14) lors de chaque rotation de la pompe peut être modifié pour accroître l'avance des roues entraînées par le dispositif d'entraînement supplémentaire (roues avant 3') par rapport aux roues motrices principales (roues arrière 3).

6. Dispositif d'entraînement selon la revendication 5, caractérisé en ce que le dispositif de commutation supplémentaire (commutateur à échelons 22) comporte plusieurs échelons de commutation pour accroître d'une manière échelonnée le volume de refoulement de la pompe lors de chaque rotation de cette dernière.

7. Dispositif d'entraînement selon l'une des revendications 1 à 6, caractérisé en ce que le dispositif de commande contient un microprocesseur (20).

8. Dispositif d'entraînement selon l'une des revendications 1 à 7, caractérisé en ce que le dispositif de commande (microprocesseur 20) peut être relié à un appareil d'entrée de données (24) pour l'introduction et/ou la modification de grandeurs caractéristiques de construction du dispositif d'entraînement ou éventuellement de la courbe de compensation (K).

FIG.1

EP 0 563 515 B1

# FIG. 2

EP 0 563 515 B1

## FIG. 3